# EUROPEAN PATENT APPLICATION

(11) **EP 4 674 807 A1**
(43) Date of publication of application: **07.01.2026**
(21) Application number: 24186269.7
(22) Date of filing: 03.07.2024
(51) Int. Cl.: C01B 3/38, C01B 3/50

(54) **HYDROGEN PRODUCTION PROCESS WITH CARBON DIOXIDE CAPTURE**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: DASGUPTA, Sayan, 60439 Frankfurt (DE); ROESCH, Alexander, 60439 Frankfurt (DE)
(74) Representative: Air Liquide

(57) **Abstract**

A process to produce hydrogen is disclosed. According to the process, a hydrocarbon-containing feedstock stream is subjected to autothermal reforming and subsequent water-gas shift, and the carbon dioxide of the resulting shifted synthesis gas stream is captured. In a fired heater, a hydrocarbon-containing fuel stream is combusted, and heat is indirectly transferred from the resulting flue gas stream to water to obtain a steam stream. The carbon dioxide of the flue gas stream is captured. The produced steam stream is used to perform mechanical work and/or to generate electricity, which is consumed in process.

## Description

The invention relates to an autothermal reforming based process to produce hydrogen.

Hydrogen production based on fossil feedstock is associated with substantial carbon dioxide emissions. It is thus imperative to reduce the carbon footprint of hydrogen production to minimize its impact on the environment.

Two principles are known from industrial production processes how to capture carbon dioxide in a hydrogen production unit. According to the first principle, referred to as pre-combustion, carbon dioxide is captured before any combustion reaction takes place. One example of this principle is the carbon dioxide capture from produced synthesis gas. According to the second principle, post-combustion, the carbon dioxide is captured after a combustion reaction has taken place and before the carbon dioxide containing gas is released into the atmosphere. One example of this principle is the carbon dioxide capture from a flue gas.

Pre-combustion carbon dioxide capture can achieve an overall carbon dioxide capture of approximately 50 to 60 % in conventional steam methane reforming (SMR) based hydrogen generation processes. In autothermal reforming (ATR) based hydrogen generation processes, an intrinsic carbon dioxide capture rate of approximately 85 to 90 % is achieved.

Since no external heating is required in an ATR process for the conversion of the feedstock to synthesis gas, as is the case in the endothermic SMR process, the carbon dioxide emissions in the ATR process are also caused by fuel combustion of a fossil feedstock in a fired heater. The fired heater is required for pre-heating the various feedstock streams. This includes heating of the natural gas stream before it is routed to the hydrodesulfurization unit, heating of the desulfurized stream before it is routed to a pre-reforming stage, heating the pre-reformed stream before it is routed to the ATR reactor, or any combination of the aforementioned.

This problem can be overcome by branching off a split stream of the hydrogen product stream and use this hydrogen stream as the fuel in the fired heater. Thus, the overall carbon dioxide capture rate is increased to approximately 95 % or even more with an ATR based production unit by means of a single carbon dioxide capture step. However, the mentioned carbon dioxide capture rate includes only the direct carbon dioxide emissions. It does not include the carbon intensity of the electricity imported in the process, which is required to drive pumps and compressors, for instance.

As the imported electricity carries a high carbon intensity, the import and consumption of said electricity therefore may cause significant indirect carbon dioxide emissions.

A further high energy demand for ATR based hydrogen production comes from the required Air Separation Unit (ASU). The ASU is an integral part of the ATR based hydrogen production unit, since it supplies the oxygen required for the ATR process for partial oxidation of the hydrocarbon containing feedstock and eventual reforming process. The ASU is per se an electricity-intensive process unit.

In ATR based production schemes, the intrinsic generation of steam in waste heat recovery is significant. The generated steam can be used as a source of power either by directly driving electricity consumers or by producing electricity from the steam through a generator or an equivalent setup and exporting the electricity to the electricity consumer. Utilizing steam as a source of power can thus reduce the net import of electricity in an ATR based process unit. In particular, it reduces indirect carbon dioxide emissions to an extent on top of the direct carbon dioxide emissions reduced by a pre-combustion carbon dioxide capture step and the fraction of the hydrogen product firing. However, the process intrinsic generation of steam will not be sufficient to cover the electricity demand of the entire process. This means that additional electricity has to be imported, which contributes to indirect carbon dioxide emissions. There is therefore a requirement to further reduce the process's indirect carbon dioxide emissions.

To further increase the direct carbon dioxide capture rate, increasing hydrogen product firing is possible. However, to maintain a constant hydrogen product output, more hydrocarbon feedstock is to be processed through the ATR process and hence more oxygen shall be required for achieving the same hydrogen product output. The increased oxygen demand shall in turn increase the indirect carbon dioxide emissions for the same amount of hydrogen product. Thus, the direct emission reduction shall occur at the expense of increased indirect carbon dioxide emissions.

In theory, it is possible to increase the hydrogen generation with the objective to fire said hydrogen in an auxiliary boiler to generate steam in such high amount as power source, that the carbon dioxide capture rate becomes higher than 95 % including also indirect carbon dioxide emissions. However, this theoretically possible method corresponds to significant disadvantages with respect to practicality. Such an approach calls for an exponentially higher actual hydrogen production while delivering a very significant part of the hydrogen product only for firing, so that only a minor amount of hydrogen will serve as the product as such. Eventually, such a concept would require much larger size hydrogen production unit with larger process subunits for a predetermined hydrogen production amount.

There is therefore a need to at least partially overcome the aforementioned disadvantages of the aforementioned processes.

In general, at least one of the underlying problems is at least partially solved by a process to produce hydrogen, comprising the process steps of
(a) Providing a hydrocarbon-containing feedstock stream;
(b) Converting the hydrocarbon-containing feedstock stream to a first synthesis gas stream by means of an autothermal reforming (ATR) step, wherein the first synthesis gas stream comprises hydrogen, carbon monoxide and carbon dioxide;
(c) Converting the first synthesis gas stream to a second synthesis gas stream by means of a water-gas shift step, wherein the second synthesis gas stream is depleted in carbon monoxide and enriched in hydrogen and carbon dioxide compared to the first synthesis gas stream;
(d) Subjecting the second synthesis gas stream to a first carbon dioxide removal step, whereby a hydrogen product stream and a first carbon dioxide product stream are obtained;
(e) Providing a hydrocarbon-containing fuel stream;
(f) Combusting the hydrocarbon-containing fuel stream in a fired heater to generate heat, and supply said heat to the process, whereby a carbon dioxide containing flue gas stream is generated by the fired heater;
(g) Indirect transfer of heat from the carbon dioxide containing flue gas stream to a water containing stream, whereby a steam stream is obtained;
(h) Subjecting the carbon dioxide containing flue gas stream to a second carbon dioxide removal step, whereby a carbon dioxide depleted flue gas stream and a second carbon dioxide product stream are obtained;
(i) Utilizing the steam stream obtained in step (g) to perform mechanical work and/or to generate electricity, and consuming said mechanical work and/or electricity in the process.

According to the invention, two carbon capture units according to steps (d) and (h) are utilized. In the first carbon dioxide removal step according to step (d), carbon dioxide from the process gas, in this case the shifted synthesis gas, is removed. This step can be referred to as a pre-combustion carbon dioxide capture step. In the second carbon dioxide removal step according to step (h), carbon dioxide from the flue gas generated in the fired heater is removed. This step can be referred to as a post-combustion carbon dioxide capture step. Furthermore, steam is generated by indirect heat transfer from the flue gas stream generated in the fired heater to a water containing stream to generate steam. Electricity can be generated on the basis of the steam stream produced according to step (g), or the steam can be used directly to perform mechanical work, for example in a turbine (step (i)). In either case, the electrical energy or mechanical work generated in this way has no negative impact on the indirect carbon dioxide emissions of the process, as the carbon dioxide is removed from the flue gas stream exiting the fired heater.

According to the solution of the invention, producing additional hydrogen to decarbonize the fired heater emissions is no longer required. The fired heater emission is mitigated by the post-combustion carbon capture unit according to step (h). Therefore, the power consumption of the decarbonized hydrogen producing process does not increase. The size of the process units to be utilized in the process also remain economic.

According to one example, the hydrocarbon containing feedstock stream is a natural gas steam. Preferably, the main component of said stream is methane. Before subjecting it to step (b), the hydrocarbon-containing feedstock stream may be subjected to a desulfurization step, for instance in a hydrodesulfurization (HDS) unit. Before subjecting it to step (b), the hydrocarbon-containing feedstock stream may further be subjected to a pre-reforming step, for instance in a pre-reformer unit, to increase the concentration of methane in the hydrocarbon-containing feedstock stream.

The ATR step according to (b) comprises, as per definition of an ATR process, a hydrocarbon partial oxidation reaction followed by catalytic reforming of the hydrocarbon with steam added to the process. Oxidation agent is preferably pure oxygen. The first synthesis gas thereby produced comprises at least hydrogen, carbon monoxide and carbon dioxide. Usually, the synthesis gas also comprises unconverted hydrocarbons and side products of the reaction. The ATR step is performed in an ATR reactor.

According to the water-gas shift step according to (c), the first synthesis gas is reacted with steam to increase the hydrogen concentration in the product gas mixture. According to the water-gas shift reaction, carbon monoxide reacts with water (steam) to afford carbon dioxide and hydrogen. Therefore, the second synthesis gas stream is depleted in carbon monoxide and enriched in hydrogen and carbon dioxide compared to the first synthesis gas stream. The water-gas shift step may comprise use of one or a plurality of water-gas shift reactors or converters, arranged downstream of the ATR reactor. The plurality of water-gas shift converters may comprise at least one high temperature shift converter (HTSC) and at least one low temperature shift converter (LTSC) arranged downstream of the HTSC.

The hydrogen product stream according to step (d) is either a raw hydrogen product stream or a purified hydrogen product stream, depending on whether a hydrogen purification step is included in step (d) or not. For step (d), it is only decisive that carbon dioxide is removed from the carbon dioxide- and hydrogen-enriched second synthesis gas stream. This can be done, for example, by an absorptive, adsorptive or membrane-based process.

According to step (f), heat is generated in the fired heater, and said heat is supplied to the process. According to one example, the heat generated in the convection section of the fired heater is supplied for pre-heating the hydrocarbon containing feedstock stream, before it is converted into synthesis gas according to step (b).

According to step (g), heat is indirectly transferred from the carbon dioxide containing flue gas stream to a water containing stream, whereby a steam stream is obtained.

The water containing stream can be formed from a liquid water stream, a biphasic water-steam stream, or by a gaseous steam stream. In other words, it is only crucial that the water containing stream contains water (H₂O), the aggregate state is not decisive. For instance, heat may be indirectly transferred from the flue gas stream to a steam stream, to obtain a superheated steam stream.

The indirect heat transfer may be effected by a heat exchanger, for example a shell- and-tube heat exchanger or a plate heat exchanger.

According to a preferred embodiment of the invention, the first carbon dioxide removal step comprises an adsorption based separation step to which the second synthesis gas stream is subjected, whereby the hydrogen product stream and a carbon dioxide containing tail-gas stream are obtained, and wherein carbon dioxide is removed from the tail-gas stream by means of a subsequent cryogenic separation step, whereby the first carbon dioxide product stream and an off-gas stream are obtained.

For instance, according to this embodiment, hydrogen may be separated from the second synthesis gas stream by means of a pressure swing adsorption (PSA) process. Thereby, the hydrogen product stream is obtained. The PSA tail gas obtained therein may be compressed, dried, further compressed and then cooled down to a low temperature to separate carbon dioxide through condensation. The condensed carbon dioxide may be subjected to a cryogenic distillation process to obtain the first carbon dioxide product stream. Non-condensable gas constituents may be subjected to a membrane separation process from which a hydrogen rich stream may be obtained to further increase the hydrogen yield of the process. In the membrane separation process, also the first off-gas stream may be obtained. According to this embodiment, the hydrogen product stream is a purified hydrogen product stream.

According to a preferred embodiment of the invention, the first carbon dioxide removal step comprises an absorption based separation step, in which carbon dioxide is removed from the second synthesis gas stream by means of physical or chemical absorption by a solvent and subsequent desorption of carbon dioxide from the solvent, whereby a carbon dioxide depleted second synthesis gas stream and the first carbon dioxide product stream are obtained, and wherein the carbon dioxide depleted second synthesis gas stream is subjected to an adsorption based separation process, whereby the hydrogen product stream and an off-gas stream are obtained.

According to this alternative process scheme, carbon dioxide is removed first from the second synthesis gas stream by means of physical or chemical absorption by means of a solvent, whereby a carbon dioxide depleted second synthesis gas stream is obtained. The first carbon dioxide product stream is obtained by desorption from the solvent. The solvent may also referred to as scrubbing agent or absorption agent. The hydrogen product stream is obtained in a subsequent step by means of adsorption, preferably pressure swing adsorption (PSA), to which the carbon dioxide depleted second synthesis gas stream is subjected. The tail-gas of the PSA process is the off-gas according to this embodiment. According to this embodiment, the hydrogen product stream is a purified hydrogen product stream.

For the aforementioned embodiment, physical absorption is preferred.

According to a preferred embodiment of the invention, the second carbon dioxide removal step comprises an absorption based separation step, in which carbon dioxide is removed from the carbon dioxide containing flue gas stream by means of physical or chemical absorption by a solvent and subsequent desorption of carbon dioxide from the solvent, whereby the carbon dioxide depleted flue gas stream and the second carbon dioxide product stream are obtained.

For the aforementioned embodiment, chemical absorption is preferred.

Examples for physical absorption solvents are Methanol, N-Methyl-2-pyrrolidone (NMP), a mixture of dimethyl ethers of Polyethylene glycol, and Propylene carbonate (4-Methyl-1,3-dioxolan-2-one). Methanol is preferred.

Preferred chemical absorption solvents are amines, in particular
- primary amines, for example monoethanolamine (MEA), aminomethyl-propanol (AMP)
- secondary amines, for example ethylenediamine (EDA), piperazine (PZ), butylethanolamine (BEA), diethanolamine (DEA),
- tertiary amines, for example methyldiethanolamine (MDEA), 3-Dimetyl-1-Aminomethypropanol (3DMA1P), triethylendiamine (TEDA), diethylamino-2-butanol (DEAB), 3-(Diethylamino)propylamine (DEAPA).

The purified hydrogen product stream obtained in the process according to one of the aforementioned embodiments may have a purity of more than 99 % by volume, or of more than 99.5 % by volume, or of more than 99.9 % by volume.

As an adsorption based process for separating hydrogen from other gas constituents, a pressure swing adsorption (PSA) process is preferred.

As an alternative to an adsorption based process, a membrane based hydrogen separation process may be utilized in the process according to one of the aforementioned preferred embodiments to obtain the purified hydrogen product stream.

According to a preferred embodiment of the invention, hydrogen contained in the hydrogen product stream is not used as a combustion fuel in the fired heater.

The process according to the invention allows that no additional hydrogen has to be produced in the process to decarbonize the fired heater by using hydrogen instead of a (fossil based) hydrocarbon fuel for the fired heater.

According to a preferred embodiment of the invention, the off-gas stream comprises a combustible gas constituent, in particular at least one hydrocarbon and/or carbon monoxide, and wherein at least a portion of the off-gas stream is fed to the hydrocarbon-containing fuel stream according to step (e) for combusting in the fired heater according to step (f).

Since the off-gas obtained in one of the aforementioned separation processes contains combustible gases such as carbon monoxide or hydrocarbons, said off-gases may be used for reducing the amount of natural gas fuel required for the fired heater.

At least a portion of the off-gas may also be recycled to the hydrocarbon-containing feedstock stream for conversion into the first synthesis gas stream.

According to a preferred embodiment of the invention, the carbon dioxide containing flue gas stream is subjected to the indirect transfer of heat to the water containing stream according to step (g) and subsequently is subjected to the second carbon dioxide removal step according to step (h).

According to a preferred embodiment of the invention, the heat supplied according to step (f) is utilized for at least one of
- pre-heating the hydrocarbon feedstock stream before it is subjected to the ATR step,
- pre-heating the hydrocarbon feedstock stream before it is supplied to a Hydrodesulfurization (HDS) step, which optionally forms a part of the process to produce hydrogen, and
- pre-heating the hydrocarbon feedstock stream before it is supplied to a pre-reforming step, which optionally forms a part of the process to produce hydrogen.

According to a preferred embodiment of the invention, the indirect transfer of heat from the carbon dioxide containing flue gas stream to the water containing stream is effected by means of a boiler which is arranged within a convection section of the fired heater.

According to a preferred embodiment of the invention, oxygen required for the ATR process is provided by an Air Separation Unit (ASU), and wherein the mechanical work performed and/or the electricity generated according to step (i) is consumed in at least one device which forms part of the ASU.

It is preferred to provide the mechanical work and/or electricity generated by means of the steam stream to an ASU, since air separation is an energy intensive process, which in particular requires large amounts of mechanical and electric energy for cooling and compressing.

According to a preferred embodiment of the invention, the hydrogen product stream is used for providing an ammonia synthesis gas for the production of ammonia.

The invention will now be detailed by way of exemplary embodiments and examples with reference to the attached drawings. In the figures and the accompanying description, equivalent elements are each provided with the same reference marks.

In the drawings
- Figure 1: depicts a flow diagram of an embodiment of the process according to the invention,
- Figure 2: depicts a flow diagram of an embodiment of the process according to an comparative example.

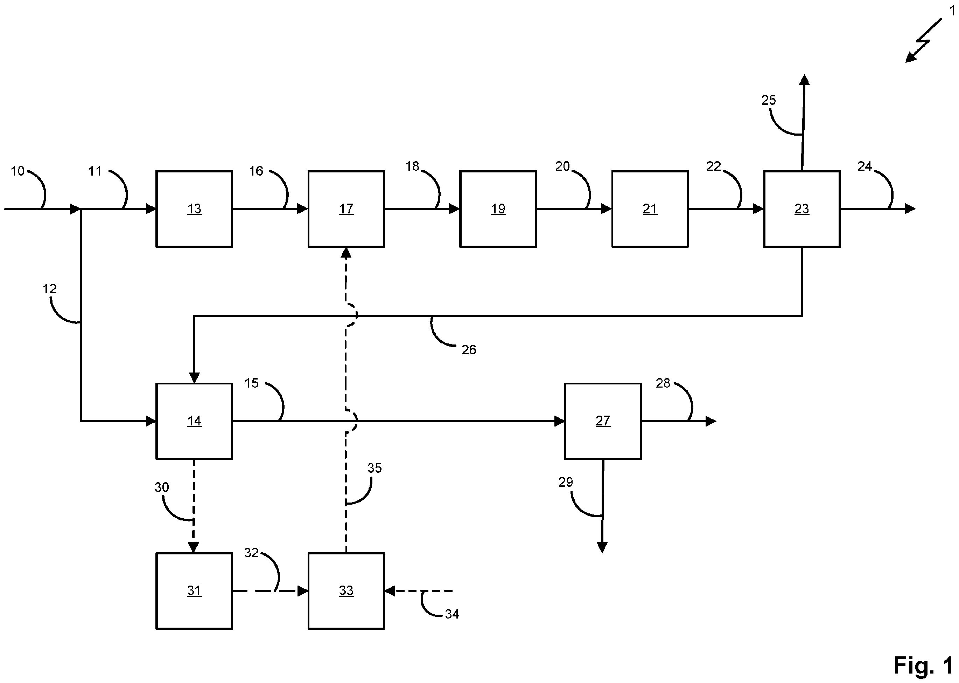

According to the process scheme depicted in Figure 1, which represents one exemplary embodiment of the process according to the invention, a combined fuel and feedstock stream 10, which was desulfurized in an upstream process in a HDS unit (not shown), is divided into a feedstock stream 11 and a fuel stream 12. The streams 10, 11 and 12 comprise light hydrocarbons with methane as the main component. The feedstock stream 11 is subjected to a pre-reforming step in a pre-reformer 13, in which the methane content of the feedstock stream 11 is increased.

The resulting pre-reformed feedstock stream 16 is combined with a steam stream (not shown) and subjected to an autothermal reforming (ATR) step in an ATR reactor 17 to obtain a first synthesis gas stream 18. In the ATR reactor, mainly methane, water (steam) and oxygen are converted to the first synthesis gas stream 18, which comprises hydrogen, carbon monoxide and carbon dioxide as the main products and some unconverted methane. The oxygen for the exothermal partial oxidation part of the ATR process is provided as an oxygen stream 35. The oxygen stream 35 is generated by means of an air separation unit (ASU) 33, to which an air stream 34 is supplied.

The first synthesis gas stream is cooled down in a waste heat recovery unit 19, by which steam is generated in the waste heat recovery unit for internal use in the process and optionally for providing export steam. The cooled-down first synthesis gas stream 20 is then subjected to a water-gas shift step in a water-gas shift unit 21.

In said water-gas shift unit 21, mainly carbon monoxide contained in the first synthesis gas stream is converted with water (steam) to afford hydrogen and carbon dioxide. In other words, in the first synthesis gas stream, the hydrogen content and the carbon dioxide is increased, whereas the carbon monoxide content is decreased. The water-gas shift unit 21 may comprise a high temperature shift converter (HTSC) and a low temperature shift converter (LTSC), wherein the LTSC is arranged downstream of and in fluid connection with the HTSC. The resulting second synthesis gas stream 22, depleted in carbon monoxide and enriched in hydrogen and carbon dioxide, is subjected to a carbon dioxide removal step in a first carbon dioxide removal unit 23.

In the first carbon dioxide removal unit 23, carbon dioxide is removed from the second synthesis gas stream 22 to afford a first carbon dioxide product stream 25, and the remaining stream is purified to afford a hydrogen product stream 24 and an off-gas stream 26. In the first carbon dioxide removal unit 23, carbon dioxide is removed from the second synthesis gas stream 22 by means of physical absorption to cold methanol at elevated pressure, for instance in an absorber column. From the physical acting solvent, the carbon dioxide is afterwards desorbed by decreasing the pressure (flashing) and additional heating (hot regeneration). The desorbed carbon dioxide may be subjected to further purification steps to afford the first carbon dioxide product stream 25. The carbon dioxide depleted synthesis gas stream is afterwards subjected to a pressure swing adsorption (PSA) unit (not shown), to afford the (purified) hydrogen product stream 24 and an off-gas stream 26.

The fuel stream 12 is routed to a fired heater 14, which also contains a boiler in its convection section. In the fired heater 14, the hydrocarbon containing fuel stream 12 is combusted with air to produce a hot carbon dioxide containing flue gas stream. Within the boiler of the fired heater 14, a steam stream 30 is produced by indirect heat transfer from the hot flue gas stream to a water stream (not shown). The thereby cooled down flue gas stream is discharged from the fired heater 14 as a carbon dioxide containing flue gas stream 15, which is then subjected to a second carbon dioxide removal step in a second carbon dioxide removal unit 27.

In the second carbon dioxide removal unit 27, carbon dioxide is removed from the cooled-down flue gas stream 15 by means of absorption to an amine solvent, for instance in an absorption column operated with an aqueous amine solvent. By absorption of carbon dioxide in the amine solvent, a carbon dioxide depleted flue gas stream is obtained, which is discharged from the absorption column and the second carbon dioxide removal unit 27 accordingly. The carbon dioxide laden or rich amine solvent may be regenerated in an amine regenerator or desorption column, for instance by indirect heat transfer of steam circulated by a steam reboiler in the bottom region of the regenerator column, to afford a second carbon dioxide product stream 29.

The carbon dioxide of the first and/or second carbon dioxide product stream 25 and 29 may be stored (carbon capture and storage, CCS) or subjected to further use (carbon capture and utilization, CCU). For instance, the carbon dioxide of the first and/or second carbon dioxide product stream may be converted to methanol with hydrogen in a carbon dioxide based methanol synthesis process.

Since the carbon dioxide of the flue gas stream discharged from the fired heater 14 is captured, the steam of the steam stream 30 has to be considered as "decarbonized steam". According to the example of Figure 1, said steam stream 30 is supplied to a power generator 31, in which electrical power is produced by means of the "decarbonized steam" provided in the process. Using said electrical power thus will not contribute to indirect carbon dioxide emissions of the process.

Said electrical power is supplied in form of an electric current stream 32 to the air separation unit (ASU) 33, in which the electric current is used for driving compressors, for instance. However, the "decarbonized steam" stream 30 may also be used directly for performing mechanical work in any suitable consumer of the process (e.g. pumps, compressors) or for producing electric power which is then used in said consumers.

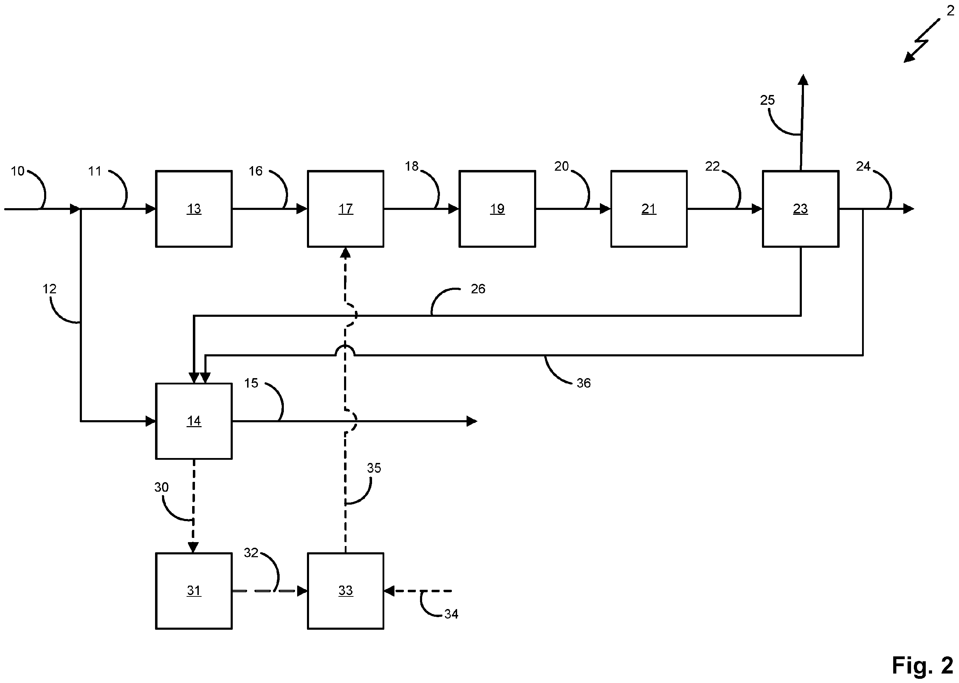

According to the process scheme depicted in Figure 2, which represents a comparative example, the flue gas obtained in the fired heater 14 is also utilized for producing steam by means of a boiler arranged within the convection section of the fired heater 14. However, the thereby obtained cooled-down flue gas 15 is not decarbonized by means of a second carbon dioxide removal step as in the example of Figure 1. Hence, to at least in part decarbonize the steam produced in the boiler of the fired heater 14, not only hydrocarbon containing fuel provided by the fuel stream 12 is supplied to the fired heater 14, but also a portion of the hydrogen product stream 24 is supplied as a hydrogen product substream 36 to the fired heater for hydrogen combustion. In theory, the entire hydrocarbon fuel stream 12 may be substituted by hydrogen firing. Thus, the boiler of the fired heater 14 would produce as well generate a stream of "decarbonized steam". However, as discussed before, this would increase the demand for the amount of hydrogen product to be produced in an economically unreasonable manner.

The following numerical example, which is based on simulation results, is intended to illustrate the advantages of the invention using two examples 1 and 2 according to the invention in comparison to two comparative examples 3 and 4.

In the table below, examples 1 and 2 represent a setup according to Figure 1, in which no hydrogen product is used as a fuel in the fired heater. Comparative examples 1 and 2 represent a setup according to Figure 2, in which the fuel for the fired heater is exclusively hydrogen (comparative example 2) or almost exclusively hydrogen (comparative example 1), which must be produced additionally. This increases the total demand for natural gas accordingly.

| **Parameter** | **Unit** | **Example 1** | **Example 2** | **Comparative example 1** | **Comparative example 2** |
|---|---|---|---|---|---|
| Hydrogen production | Nm³/h | 250000 | | | |
| Natural gas (total) | Nm³/h | 109800 | 109800 | 112400 | 112700 |
| Natural gas (feedstock) | Nm³/h | 89200 | 89200 | 112300 | 112700 |
| Natural gas (fuel) | Nm³/h | 20600 | 20600 | 100 | 0 |

The following table shows the Net power import, carbon dioxide capture rate and carbon intensity for the same setup with the same hydrogen production (250000 Nm³/h). Regarding the carbon dioxide capture rate, direct and indirect carbon dioxide capture is distinguished.

For the combined (direct and indirect) capture rate 1, an electricity carbon intensity of 300 kg carbon dioxide equivalents per MWh is assumed. For the combined (direct and indirect) capture rate 2, a lower electricity carbon intensity of 200 kg carbon dioxide equivalents per MWh is assumed.

For the combined (direct and indirect) capture carbon intensity 1, an electricity carbon intensity of 300 kg carbon dioxide equivalents per MWh is assumed. For the combined (direct and indirect) capture carbon intensity 2, a lower electricity carbon intensity of 200 kg carbon dioxide equivalents per MWh is assumed.

| **Parameter** | **Unit** | **Example 1** | **Example 2** | **Comparative example 1** | **Comparative example 2** |
|---|---|---|---|---|---|
| Net power import | MW | 14 | 14 | 18 | 20 |
| Direct capture rate | % | 97.5 | 98.6 | 97.4 | 97.5 |
| Direct and indirect capture rate 1 | % | 95.1 | 95.0 | 95.7 | 98.7 |
| Direct and indirect capture rate 2 | % | 96.3 | 97.3 | 95.8 | 95.8 |
| Direct capture carbon intensitiy | kg CO₂e/ kg Hz | 0.192 | 0.108 | 0.254 | 0.248 |
| Direct and indirect capture carbon intensity 1 | kg CO₂e/ kg H₂ | 0.371 | 0.291 | 0.490 | 0.498 |
| Direct and indirect capture carbon intensity 2 | kg CO₂e/ kg H₂ | 0.351 | 0.256 | 0.406 | 0.410 |
| Natural gas intake carbon intensity | Normalized to 100 | 97.7 | 97.7 | 100 | 100.2 |

As can be seen from the above table, the process according to the invention enables a hydrogen production process with higher carbon capture rate and lower carbon intensity, both in terms of direct and combined (direct and indirect) carbon dioxide emissions, in comparison to a process according to the comparative examples. Furthermore, the electricity import demand is lower in the process according to the invention.

### List of reference signs

- 1: Process (example according to the invention)
- 2: Process (comparative example)
- 10: Combined fuel and feedstock stream
- 11: Feedstock stream
- 12: Fuel stream
- 13: Pre-reformer
- 14: Fired heater with boiler
- 15: Carbon dioxide containing flue gas stream
- 16: Pre-reformed feedstock stream
- 17: ATR reactor
- 18: First synthesis gas stream
- 19: Waste heat recovery unit
- 20: Cooled first synthesis gas stream
- 21: Water-gas shift unit
- 22: Second synthesis gas stream
- 23: First carbon dioxide removal unit
- 24: Hydrogen product stream
- 25: First carbon dioxide product stream
- 26: Off-gas stream
- 27: Second carbon dioxide removal unit
- 28: Carbon dioxide depleted flue gas stream
- 29: Second carbon dioxide product stream
- 30: Steam stream
- 31: Power generator
- 32: Electric current
- 33: Air separation unit
- 34: Air stream
- 35: Oxygen stream
- 36: Hydrogen product substream

## Claims

1. A process (1) to produce hydrogen, comprising the process steps of
(a) Providing a hydrocarbon-containing feedstock stream (16);
(b) Converting the hydrocarbon-containing feedstock stream (16) to a first synthesis gas stream (18) by means of an autothermal reforming (ATR) step, wherein the first synthesis gas stream (18) comprises hydrogen, carbon monoxide and carbon dioxide;
(c) Converting the first synthesis gas stream (18) to a second synthesis gas stream (22) by means of a water-gas shift step, wherein the second synthesis gas stream (22) is depleted in carbon monoxide and enriched in hydrogen and carbon dioxide compared to the first synthesis gas stream (18);
(d) Subjecting the second synthesis gas stream (22) to a first carbon dioxide removal step, whereby a hydrogen product stream (24) and a first carbon dioxide product stream (25) are obtained;
(e) Providing a hydrocarbon-containing fuel stream (12);
(f) Combusting the hydrocarbon-containing fuel stream (12) in a fired heater (14) to generate heat, and supply said heat to the process, whereby a carbon dioxide containing flue gas stream (15) is generated by the fired heater (14);
(g) Indirect transfer of heat from the carbon dioxide containing flue gas stream (15) to a water containing stream, whereby a steam stream (30) is obtained;
(h) Subjecting the carbon dioxide containing flue gas stream (15) to a second carbon dioxide removal step, whereby a carbon dioxide depleted flue gas stream (28) and a second carbon dioxide product stream (29) are obtained;
(i) Utilizing the steam stream (30) obtained in step (g) to perform mechanical work and/or to generate electricity, and consuming said mechanical work and/or electricity in the process.

2. The process according to claim 1, wherein the first carbon dioxide removal step comprises an adsorption based separation step to which the second synthesis gas stream (22) is subjected, whereby the hydrogen product stream (24) and a carbon dioxide containing tail-gas stream are obtained, and wherein carbon dioxide is removed from the tail-gas stream by means of a subsequent cryogenic separation step, whereby the first carbon dioxide product stream (25) and an off-gas stream are obtained.

3. The process according to claim 1, wherein the first carbon dioxide removal step comprises an absorption based separation step, in which carbon dioxide is removed from the second synthesis gas stream (22) by means of physical or chemical absorption by a solvent and subsequent desorption of carbon dioxide from the solvent, whereby a carbon dioxide depleted second synthesis gas stream and the first carbon dioxide product stream (25) are obtained, and wherein the carbon dioxide depleted second synthesis gas stream is subjected to an adsorption based separation process, whereby the hydrogen product stream (24) and an off-gas stream are obtained.

4. The process according to any of the preceding claims, wherein the second carbon dioxide removal step comprises an absorption based separation step, in which carbon dioxide is removed from the carbon dioxide containing flue gas stream (15) by means of physical or chemical absorption by a solvent and subsequent desorption of carbon dioxide from the solvent, whereby the carbon dioxide depleted flue gas stream and the second carbon dioxide product stream (29) are obtained.

5. The process according to any of the preceding claims, wherein hydrogen contained in the hydrogen product stream (24) is not used as a combustion fuel in the fired heater (14).

6. The process according to any of claims 2 to 5, wherein the off-gas stream comprises a combustible gas constituent, in particular at least one hydrocarbon and/or carbon monoxide, and wherein at least a portion of the off-gas stream is fed to the hydrocarbon-containing fuel stream according to step (e) for combusting in the fired heater (14) according to step (f).

7. The process according to any of the preceding claims, wherein the carbon dioxide containing flue gas stream (15) is subjected to the indirect transfer of heat to the water containing stream according to step (g) and subsequently is subjected to the second carbon dioxide removal step according to step (h).

8. The process according to any of the preceding claims, wherein the heat supplied according to step (f) is utilized for at least one of
- pre-heating the hydrocarbon feedstock stream (16) before it is subjected to the ATR step,
- pre-heating the hydrocarbon feedstock stream before it is supplied to a Hydrodesulfurization (HDS) step, which optionally forms a part of the process to produce hydrogen, and
- pre-heating the hydrocarbon feedstock stream before it is supplied to a pre-reforming step, which optionally forms a part of the process to produce hydrogen.

9. The process according to any of the preceding claims, wherein the indirect transfer of heat from the carbon dioxide containing flue gas stream (15) to the water containing stream is effected by means of a boiler which is arranged within a convection section of the fired heater (14).

10. The process according to any of the preceding claims, wherein oxygen required for the ATR process is provided by an Air Separation Unit (ASU) (33), and wherein the mechanical work performed and/or the electricity generated according to step (i) is consumed in at least one device which forms part of the ASU (33).

11. The process according to any of the preceding claims, wherein the hydrogen product stream is used for providing an ammonia synthesis gas for the production of ammonia.
